Europäisches Patentamt

European Patent Office

Office européen des brevets

(19)

(11) Publication number:

**0 134 081**
A2

(12)

# EUROPEAN PATENT APPLICATION

(21) Application number: **84304212.8**

(22) Date of filing: **21.06.84**

(51) Int. Cl.⁴: **C 05 G 3/00**

(30) Priority: **30.06.83 GB 8317764**

(43) Date of publication of application: **13.03.85** **Bulletin 85/11**

(84) Designated Contracting States: **DE FR GB NL**

(71) Applicant: **BP NUTRITION (UK) LIMITED, Stepfield Witham, Essex, CM8 3AB (GB)**

(72) Inventor: **Perry, Frederick George, BP Nutrition (UK) Limited Stepfield, Witham Essex, CM8 3AB (GB)**

(74) Representative: **Eastman, Hugh Leonard et al, c/o The British Petroleum Company plc Patents Division Chertsey Road, Sunbury-on-Thames Middlesex TW16 7LN (GB)**

(54) **Nutrients for mushroom culture.**

(57) A growth medium for mushrooms contains one or more nutrients absorbed into particles of an inert material having a porous structure. The inert material may be vermiculite which may contain at least 50% of its own weight of nutrient.

Preferred nutrients, present in an amount of from 0.01 to 10% wt of dry growth medium, may be sugar alcohols and lipids. The growth medium may also contain 0.1 to 10% of one or more ohter nutrients, eg aldehyde treated protein, added in conventional manner.

EP 0 134 081 A2

1

# NUTRIENTS FOR MUSHROOM CULTURE

This invention relates to nutrients for mushroom culture.

Mushrooms are normally grown in compost and it is known that growth may be stimulated by the addition of nutrients. Finding the right nutrient is not necessarily a simple matter, however.

The compost in which the mushrooms are grown will contain other micro organisms, which may compete with the mushroom mycelium for the nutrient. These other micro-organisms may, indeed, contribute to the mushroom growing process by making the compost more suitable for colonization by the mushroom mycelium but if the other microorganisms are over stimulated, the temperature of the compost may rise too high.

Another desirable quality of a nutrient is that it should be released slowly. It is commercially convenient to add the nutrient at spawning (ie when the spawn is added to the compost) or at casing (ie when the compost containing the developing mycelium is covered with peat or soil). Too rapid a release of the nutrient may cause it to be preferentially utilised by the other microorganisms and so give rise to over heating, which can destroy the developing mycelium and thus reduce yields. Further, since the mushrooms are harvested in a series of flushes, too rapid a release may mean that insufficient nutrient is left to maintain the yield of the later flushes.

Proteins are known to be suitable nutrients and it is also known that chemical modification of the protein can slow up release. Thus denatured proteins, and specifically aldehyde- treated protein have been proposed as mushroom nutrients. It has also been proposed that the denatured protein should be mixed with vegetable or fish oil, the oil having, it is claimed, a synergistic effect.

1

0134081

It has now been found that the utilisation of nutrients can be improved by combining the nutrients with an inert porous carrier.

According to the present invention, therefore, a growth medium for mushrooms contains one or more nutrients absorbed into particles of an inert material having a porous structure.

The inert material is preferably a porous inorganic compound and is more preferably a porous mineral. It is preferably exfoliated vermiculite but other suitable minerals may be pumice or porous clays.

By "inert" we mean a material which will not of itself release any substances which would affect the growth of the mushrooms or would otherwise interfere with the growing process. Whether any given material is inert can readily be determined by experiment.

By "material having a porous structure" we mean a material capable of carrying a large proportion, preferably at least 50%, of its own weight of nutrients without alteration of the physical characteristics of the material. Thus the particles should remain free flowing and should not be sticky or greasy.

The preferred material, vermiculite, is a laminar material with distinct cleavage planes and which, when exfoliated, has the exfoliations at right angles to the cleavage planes causing the original laminar particles to expand into concertina-shaped granules. It is this exfoliated structure which allows it to absorb a high proportion of nutrients without change in physical characteristics. Further, the absorbed nutrient is physically protected by the surrounding laminae so that its release as a nutrient for the mushroom mycelium is slow and controlled, without it being totally inaccessible.

Vermiculite is known as a component of plant growth media, but it is generally recognised that the growth of mushrooms or other fungi does not follow the same pattern as that of plants. Further, as will be explained hereafter, the proportion of vermiculite in the total mushroom growth medium is likely to be small and to have no effect other than a carrier to control the release of the nutrients.

Expanded perlite and bentonite are minerals that have been proposed as components of mushroom growth media, but not with

0134081

nutrients absorbed into them.

The essential feature of the present invention is the use of inert material having nutrient absorbed into it so that the release of the nutrient is controlled.

The nutrients may be any of these capable of promoting the growth of mushrooms either as nutrients per se or as adjuvants or synergists for other nutrients.

The present invention is particularly useful for nutrients which might be otherwise difficult to admix with the mushroom growth medium eg liquids of any nutrient nature.

Lipids, eg the vegetable and fish oils of the prior art, are potential promoters of mushroom growth and many of them are liquid at ambient temperatures. Examples of suitable liquid lipids are fish oils, soya oil, cottonseed oil, groundnut (peanut) oil and sunflower oil.

However, the present invention can also be applied to nutrients which are solid at room temperature. Normally solid nutrients can be intimately admixed with the inert material by melting the nutrient, admixing it with the inert material in the molten state, and allowing the admixture to cool.

Some normally solid lipids have also been found to promote mushroom growth and most of them will have relatively low melting points and so be capable of being admixed with the inert materials in the molten state. Examples of suitable solid lipids may be tallow, fatty acids such as palmitic and stearic acid, palm oil, and palm kernel or coconut oil.

Other nutrients capable of use in the present invention are:-

Polyhydric alcohols particularly the so-called sugar alcohols which occur naturally in syrups isolated from trees, or which may be produced from sugars by reduction eg high pressure hydrogenation or electrolytic reduction. They may be hexahydric or pentahydric alcohols. Examples of suitable sugar alcohols are:-

Sorbitol

Mannitol

Arabinitol

Xylitol

Galactitol

Another source of sugar alcohols may be hydrogenated sugar syrups which may, in their turn, be produced by the enzymatic hydrolysis of starch. A suitable material of this type is that sold by Roquette Freres under the Registered Trade Mark "Lycasin" which contains D-sorbitol and hydrogenated di- and poly-saccharides. Some of the polyhydric alcohols may be liquid and some solid and may be admixed with the inert material as described above.

Fatty acids as defined and described in UK Patent Application No 8317763. Again, some of these may be liquid and some solid and be admixed as described above. Some fatty acids, at least, may be considered as types of lipid, and the term lipid, as used previously, is not to be construed as excluding fatty acids.

The weight of nutrient in relation to the weight of inert material may vary depending on circumstances but is preferably as high as possible consistent with the material maintaining its physical characteristics as previously described. As previously indicated, it is preferably at least 50%. It may suitably be at least 100% wt by weight of inert material and may be as high as 150% wt.

The growth medium may conveniently be compost.

The present invention includes a method of growing mushrooms in which one or more nutrients absorbed into particles of an inert material having a porous structure is added to the growth medium.

The nutrient-inert material particles are preferably added at the time of spawning or, possibly, at the time of casing.

The amount of nutrient used in the form of nutrient-inert material particles may vary according to the conditions of cultivation and the optimum amount may be determined by trial. Normally, it may be from 0.01 to 10% wt of nutrient (ie excluding the inert material) by weight of dry growth medium, preferably 0.1 to 5% wt.

The nutrient added according to the present invention may be the sole nutrient, or it may be used in combination with other nutrients added in a conventional manner, e.g. denatured protein, and more particularly aldehyde-treated protein, added as solid particles.

The other nutrient may also be used in an amount from 0.1 to 10% by weight of the dry growth medium.

If the nutrient added in the form of nutrient-inert particles is a promoter for the other nutrient it is preferably used in minor proportion with respect to the other nutrient (ie less than 50% by weight of the other nutrient).

The invention is illustrated by the following examples.

Example 1

This example describes the preparation of nutrient-vermiculite compositions.

The vermiculite used was obtained from Mandoval Ltd.

The nutrients used were

1. Tall Oil Fatty Acid

This was produced by distillation of resin obtained during wood pulping. It was a liquid with a free fatty acid content of 99%, 95% of the fatty acids being $C_{18}$ unsaturated acids.

2. Lycasin (Registered Trade Mark)

Lycasin 80/55 is obtained by the hydrogenation of a glucose syrup, itself obtained by enzymatic hydrolysis of food starch, and has the following composition:

D-sorbitol 6-8%

hydrogenated disaccharides 50-55%

hydrogenated tri- to hexa- saccharides 20-25%

hydrogenated saccharides (higher than hexa) 15-20%.

The nutrients were admixed with the vermiculite by simple mixing to a level of 50% wt of nutrient by weight of the mixture (ie 50% wt nutrient/50% wt vermiculite.

The nutrients were adsorbed by the vermiculite without altering the physical characteristics in any way.

Example 2

This example describes trials of the Tall Oil Fatty Acid-vermiculite particles for growing mushrooms. A control trial was

0134081

carried out under identical conditions apart from the absence of nutrient.

In some of the trials the Tall Oil Fatty Acid-vermiculite particles were used in combination with formaldehyde-treated protein. The protein was soya bean meal (protein content 48% wt) which had been ground through a 2.5 mm screen and which had been treated with 5000 ppm wt of formaldehyde by weight of soya bean meal.

The trial conditions were Compost fill - 17 lbs/sq ft of bed surface area Mushroom mycelium - 5.15 lbs/sq ft of bed surface area Bed surface area - 8 containers each of $2\frac{1}{2}$ sq ft surface area

The results obtained up to and including the fifth and final flush are shown in Table 1.

The % wt of TOFA refers to the weight of TOFA alone, excluding vermiculite.

Example 3

This example describes trials of the Lycasin-vermiculite particles for growing mushrooms. A control trial was also carried out under identical conditions apart from the absence of nutrient.

The trial conditions were as described in Example 2.

The results obtained up to and including the fifth and final flush are shown in Table 2.

Table 1

| | Yield per flush lbs/ft$^2$ | | | | | Total Yield lbs/ft$^2$ | % Increase over control |
|---|---|---|---|---|---|---|---|
| | 1st | 2nd | 3rd | 4th | 5th | | |
| Control | 0.96 | 1.32 | 0.43 | 0.17 | 0.09 | 2.97 | - |
| Tall Oil Fatty acid/Vermiculite | | | | | | | |
| 0.12% wt TOFA/wt dry compost | 1.07 | 1.48 | 0.47 | 0.18 | 0.09 | 3.30 | 11.1 |
| 0.48% wt TOFA/wt dry compost | 1.16 | 1.35 | 0.40 | 0.17 | 0.10 | 3.19 | 7.4 |
| HCHO-treated protein | | | | | | | |
| 3% wt protein/wt dry compost | 1.17 | 1.48 | 0.62 | 0.27 | 0.12 | 3.66 | 23.2 |
| HCHO-treated protein + TOFA-vermiculite | | | | | | | |
| 3% wt protein + 0.12% wt TOFA | 1.33 | 1.84 | 0.70 | 0.47 | 0.45 | 4.80 | 61.6 |
| 3% wt protein + 0.48% wt TOFA | 1.46 | 1.66 | 0.73 | 0.33 | 0.24 | 4.41 | 45.1 |

Table 2

| | Yield per flush lbs/ft$^2$ | | | | | Total Yield lbs/ft$^2$ | % Increase over Control |
|---|---|---|---|---|---|---|---|
| | 1st | 2nd | 3rd | 4th | 5th | | |
| Control | 0.88 | 1.12 | 0.60 | 0.36 | 0.32 | 3.28 | - |
| 0.5% Lycasin | 0.97 | 1.16 | 0.61 | 0.35 | 0.27 | 3.36 | 2.4 |
| 1.5% Lycasin | 1.09 | 1.27 | 0.63 | 0.42 | 0.31 | 3.71 | 13.1 |
| 3.0% Lycasin | 1.06 | 1.29 | 0.66 | 0.34 | 0.34 | 3.70 | 12.8 |

The % wt of Lycasin refers to the weight of Lycasin alone, excluding the vermiculite.

Claims:

1. A growth medium for mushrooms containing one or more nutrients absorbed into particles of an inert material having a porous structure.

2. A growth medium as claimed in claim 1 wherein the inert material is vermiculite.

3. A growth medium as claimed in claim 1 or 2 wherein the growth medium is compost.

4. A growth medium as claimed in claims 1, 2 or 3 wherein the inert material has at least 50% of its own weight of one or more nutrients absorbed into it.

5. A growth medium as claimed in any of claims 1 to 4 containing from 0.01 to 10% wt of one or more nutrients by weight of dry growth medium.

6. A growth medium as claimed in any of claims 1 to 5 wherein the nutrient is a polyhydric alcohol.

7. A growth medium as claimed in claim 6 wherein the polyhydric alcohol is a sugar alcohol.

8. A growth medium as claimed in claim 7 wherein the sugar alcohol is contained in a hydrogenated sugar syrup.

9. A growth medium as claimed in any of claims 1 to 5 wherein the nutrient is a lipid.

10. A growth medium as claimed in claim 9 wherein the lipid is a fatty acid.

11. A growth medium as claimed in any of claims 5 to 10 containing from 0.1 to 10% wt of one or more other nutrients added in conventional manner.

12. A growth medium as claimed in claim 11 wherein the other nutrient is aldehyde-treated protein.

13. A method of growing mushrooms using a growth medium as claimed in any of claims 1 to 12.